# EUROPÄISCHE PATENTANMELDUNG

(11) **EP 2 642 653 A1**
(43) Veröffentlichungstag der Anmeldung: **25.09.2013**
(21) Anmeldenummer: 12160277.5
(22) Anmeldetag: 20.03.2012
(51) Int. Cl.: H02M 7/217, H02M 1/42

(54) **Treiberschaltung und Ansteuerverfahren**

(71) Anmelder: C. & E. Fein GmbH, 73529 Schwäbisch Gmünd-Bargau (DE)
(72) Erfinder: Beichter, Martin, 70195 Stuttgart (DE); Heilig, Mark, 71364 Winnenden (DE); Rinckleb, Ulf, 73485 Unterschneidheim (DE); Steinhart, Heinrich, 73430 Aalen (DE)
(74) Vertreter: Witte, Weller & Partner

(57) **Zusammenfassung**

Die vorliegende Erfindung betrifft eine Treiberschaltung (10) zum Ansteuern eines elektrischen Verbrauchers (18), insbesondere einer elektrischen Maschine (18), mit einem Eingangsanschlusspolpaar (72, 74), um die Treiberschaltung (10) mit einer Wechselspannungsquelle zu verbinden, einem Ausgangsanschlusspol (48), um die Treiberschaltung (10) mit dem Verbraucher (18) zu verbinden, einer Gleichrichterschaltung (12), die mit dem Eingangsanschlusspolpaar (72, 74) verbunden ist, um eine Wechselspannung (20) der Wechselspannungsquelle (16) in eine pulsierende Gleichspannung (22) zu wandeln, einem Stellglied (14), das eingangsseitig mit der Gleichrichterschaltung (12) und ausgangsseitig mit dem Ausgangsanschlusspol (48) verbunden ist, wobei das Stellglied (14) einen steuerbaren Schalter (50; 60,62) und eine Steuerung (56) zum Steuern des steuerbaren Schalters (50; 60, 62) aufweist, wobei die Steuerung (56) den steuerbaren Schalter (50; 60, 62) mittels eines Pulsfolgesignals (32) entsprechend ein- und ausschaltet, und wobei eine elektrische Ausgangsgröße (18) der Treiberschaltung (10) durch Schalten des steuerbaren Schalters (50; 60, 62) einstellbar ist, wobei die Steuerung (56) dazu ausgebildet ist, wenigstens eine zeitliche Größe (T, t1, t2, f) des Pulsfolgesignals (32) innerhalb einer Periode (Tₚ) der pulsierenden Gleichspannung 22 derart zu variieren, dass an dem Ausgangsanschlusspol 48 ein Treiberstrom I mit einem definierten Verlauf innerhalb der Periode (Tₚ) eingestellt wird.

## Beschreibung

Die vorliegende Erfindung betrifft eine Treiberschaltung zum Ansteuern eines elektrischen Verbrauchers, insbesondere einer elektrischen Maschine, mit einem Eingangsanschlusspolpaar, um die Treiberschaltung mit einer Wechselspannungsquelle zu verbinden, einem Ausgangsanschlusspolpaar, um die Treiberschaltung mit dem Verbraucher zu verbinden, einer Gleichrichterschaltung, die mit einem Eingangsanschlusspolpaar verbunden ist, um eine Wechselspannung der Wechselspannungsquelle in eine pulsierende Gleichspannung zu wandeln, einem Stellglied, das eingangsseitig mit der Gleichrichterschaltung und ausgangsseitig mit dem Ausgangsanschlusspolpaar verbunden ist, wobei das Stellglied einen steuerbaren Schalter und eine Steuerung zum Steuern des steuerbaren Schalters ausweist, wobei die Steuerung den steuerbaren Schalter mittels eines Pulsfolgesignals entsprechend ein- und ausschaltet, und wobei eine elektrische Ausgangsgröße der Treiberschaltung durch Schalten des steuerbaren Schalters einstellbar ist.

Die vorliegende Erfindung betrifft ferner ein Verfahren zum Ansteuern eines elektrischen Verbrauchers, insbesondere einer elektrischen Maschine, mit den Schritten Verbinden einer Gleichrichterschaltung mit einer Wechselspannungsquelle, Wandeln einer Wechselspannung von der externen Wechselspannungsquelle in eine pulsierende Gleichspannung, Wandeln der pulsierenden Gleichspannung mittels eines Stellglieds in eine elektrische Ausgangsgröße zum Ansteuern des elektrischen Verbrauchers, wobei das Stellglied einen steuerbaren Schalter aufweist, der mittels eines Pulsfolgesignals entsprechend ein- und ausgeschaltet wird, um die elektrische Ausgangsgröße in Abhängigkeit wenigstens einer zeitlichen Größe des Pulsfolgesignals einzustellen.

Ferner betrifft die vorliegende Erfindung ein Elektrowerkzeug mit einer elektrischen Maschine und mit einer Treiberschaltung zum Ansteuern der elektrischen Maschine.

Schließlich betrifft die vorliegende Erfindung eine elektrische Antriebseinheit mit einer elektrischen Maschine, die einen Ständer und einen Läufer aufweist, und mit einer Treiberschaltung zum Ansteuern der elektrischen Maschine.

Aus dem Stand der Technik ist es bekannt, einen elektrischen Gleichstromverbraucher, wie zum Beispiel eine Gleichstrommaschine oder einen Wechselrichter zum Ansteuern einer Drehstrommaschine mittels einer Treiberschaltung anzusteuern, die einen Gleichrichter und einen Spannungswandler aufweist, um eine Netzwechselspannung in eine beliebige Gleichspannung zu wandeln. Als Gleichspannungswandler werden dabei üblicherweise Hochsetzsteller, Tiefsetzsteller oder Hoch-Tiefsetzsteller verwendet. Der Gleichrichter wandelt die Netzwechselspannung in eine pulsierende Gleichspannung, wobei zwischen dem Spannungswandler und dem Gleichrichter zur Glättung der pulsierenden Wechselspannung üblicherweise ein Kondensator mit einer großen Kapazität geschaltet wird. Ausgangsseitig wird der Gleichspannungswandler üblicherweise mit einem Glättungskondensator mit einer großen Kapazität verbunden, um eine konstante oder nahezu konstante Ausgangsspannung bereitzustellen.

In Abhängigkeit des angeschlossenen elektrischen Verbrauchers bzw. in Abhängigkeit einer Drehzahl und eines Lastmomentes einer angeschlossenen elektrischen Maschine stellt sich am Ausgang ein entsprechender Laststrom ein und es wird von dem elektrischen Verbraucher der Treiberschaltung entsprechend eine elektrische Leistung entnommen.

Nachteilig dabei ist es, dass mit dem Zwischenkreiskondensator elektrische Energie ausgetauscht wird und dadurch der Wirkungsgrad der Ansteuerschaltung reduziert ist. Ferner ist es nachteilig, dass die verwendeten Zwischenkreiskondensatoren einen großen Bauraum benötigen und ein hohes Gewicht aufweisen.

Es ist daher die Aufgabe der vorliegenden Erfindung, eine verbesserte Ansteuerschaltung für einen elektrischen Verbraucher bereitzustellen, die einen erhöhten Wirkungsgrad, einen geringeren Bauraum und ein reduziertes Gewicht aufweist.

Diese Aufgabe wird bei der eingangs genannten Treiberschaltung zum Ansteuern eines elektrischen Verbrauchers dadurch gelöst, dass die Steuerung dazu ausgebildet ist, wenigstens eine zeitliche Größe des Pulsfolgesignals innerhalb einer Periode der pulsierenden Gleichspannung derart zu variieren, dass an dem Ausgangsanschlusspol ein Treiberstrom mit einem definierten Verlauf innerhalb der Periode eingestellt wird.

Diese Aufgabe wird bei dem eingangs genannten Verfahren dadurch gelöst, dass die zeitliche Größe des Pulsfolgesignals innerhalb einer Periode der pulsierenden Gleichspannung variiert wird, um einen Treiberstrom als die elektrische Ausgangsgröße in der Periode entsprechend definiert einzustellen.

Ferner wird diese Aufgabe gelöst durch ein Elektrowerkzeug mit einer elektrischen Maschine und mit einer Treiberschaltung zum Ansteuern der elektrischen Maschine der oben genannten Art.

Schließlich wird diese Aufgabe gelöst durch eine elektrische Antriebseinheit mit einer elektrischen Maschine und mit einer Treiberschaltung zum Ansteuern der elektrischen Maschine der oben genannten Art.

Erfindungsgemäß wird unter einer zeitlichen Größe des Pulsfolgesignals eine beliebige zeitliche Verschiebung der steigenden und fallenden Pulsflanken sowie eine beliebige Variation der Häufigkeit der Pulse verstanden.

Dadurch, dass der Treiberstrom über das Pulsfolgesignal mit einem definierten Verlauf eingeprägt werden kann, kann auf einen ausgangsseitigen Glättungskondensator verzichtet werden, so dass keine elektrische Leistung mit dem Zwischenkreiskondensator ausgetauscht wird. Dadurch wird sämtliche elektrische Leistung an den elektrischen Verbraucher abgegeben, wodurch der Wirkungsgrad der Treiberschaltung entsprechend erhöht werden kann. Da auf den Zwischenkreiskondensator durch diese Art der Ansteuerung verzichtet werden kann, kann ferner die Baugröße und das Gewicht der Treiberschaltung reduziert werden.

Es ist bevorzugt, wenn die zeitliche Größe des Pulsfolgesignals eine Pulshäufigkeit innerhalb der Periode ist.

Dadurch kann mit regelungstechnisch geringem Aufwand der steuerbare Schalter variabel gesteuert werden und der definierte Verlauf des Treiberstroms eingestellt werden.

Es ist weiterhin bevorzugt, wenn die zeitliche Größe des Pulsfolgesignals ein Tastverhältnis des Pulsfolgesignals ist.

Dadurch kann der Treiberstrom über einen großen Wertebereich variiert werden.

Es ist weiterhin bevorzugt, wenn die Steuerung mit einer Messanordnung verbunden ist, die zum Messen einer Ausgangsspannung und/oder des Treiberstroms dem Ausgangsanschlusspol zugeordnet ist, um die zeitliche Größe auf der Grundlage der gemessenen Ausgangsspannung und/oder des gemessenen Treiberstroms einzustellen.

Dadurch ist eine einfache Rückkopplung der Ausgangsgrößen der Treiberschaltung möglich, wodurch eine zeitnahe und präzise Einstellung der Ausgangsgrößen möglich wird.

Es ist weiterhin bevorzugt, wenn eine Steuereinheit des Verbrauchers über eine Steuerleitung mit der Steuerung verbunden ist, um die zeitliche Größe einzustellen.

Dadurch kann der elektrische Verbraucher ein benötigtes Ansteuersignal bzw. eine benötigte elektrische Eingangsgröße von der Treiberschaltung anfordern und somit das Gerät mit elektrischer Energie versorgt werden.

Es ist weiterhin bevorzugt, wenn das Stellglied eine eingangsseitige Messvorrichtung aufweist, um die pulsierende Gleichspannung zu messen und den Treiberstrom mittels des Pulsfolgesignals bereitzustellen, sofern pulsierende Gleichspannung einen vordefinierten Schwellenwert überschreitet.

Dadurch wird dem elektrischen Verbraucher lediglich dann eine elektrische Energie bereitgestellt, wenn die pulsierende Gleichspannung einen bestimmten Schwellenwert überschreitet, wodurch der Austausch von Blindströmen des elektrischen Verbrauchers mit der Treiberschaltung reduziert ist.

Es ist weiterhin bevorzugt, wenn die zeitliche Größe derart einstellbar ist, dass eine an dem Ausgangsanschlusspol bereitgestellte elektrische Leistung konstant ist.

Dadurch kann der elektrische Verbraucher besonders präzise angesteuert werden, da die von dem elektrischen Verbraucher abgegebene Leistung der zugeführten Leistung entspricht.

Es ist weiterhin bevorzugt, wenn die zeitliche Größe derart einstellbar ist, dass der bereitgestellte Treiberstrom konstant ist.

Ein konstant abgegebener Strom kann mit besonders geringem regelungstechnischen Aufwand bereitgestellt werden.

Es ist weiterhin bevorzugt, wenn die zeitliche Größe derart einstellbar ist, dass der Treiberstrom phasengleich ist mit der Ausgangsspannung.

Dadurch kann der Austausch von Blindleistung zwischen dem elektrischen Verbraucher und der Treiberschaltung reduziert werden, da keine Phasenverschiebungen zwischen dem Treiberstrom und der Ausgangsspannung auftreten können.

Es ist weiterhin bevorzugt, wenn die Messanordnung dazu ausgebildet ist, die elektrische Größe zu vordefinierten Zeitpunkten innerhalb der Periode zu messen und ein entsprechendes Steuersignal der Steuerung bereitzustellen.

Dadurch kann die Messanordnung mit geringem technischem Aufwand realisiert werden und das Steuersignal bedarfsorientiert an die Steuerung weitergeleitet werden.

Dabei ist es besonders bevorzugt, wenn die Steuerung dazu ausgebildet ist, den steuerbaren Schalter zu den vordefinierten Zeitpunkten mittels des Pulsfolgesignals in Abhängigkeit des Steuersignals zu steuern. Mit anderen Worten wird zu den vordefinierten Zeitpunkten wenigstens eine der Ausgangsgrößen der Treiberschaltung gemessen und auf der Grundlage der gemessenen Größe der steuerbare Schalter mittels des Pulsfolgesignals geschaltet.

Dadurch kann eine besonders hohe Regelstabilität des rückgekoppelten Signals gewährleistet werden.

Es ist weiterhin bevorzugt, wenn das Stellglied als Hochsetzsteller, als Tiefsetzsteller oder als Hoch-Tiefsetzsteller ausgebildet ist.

Dadurch kann mit geringem technischen Aufwand und hohem Wirkungsgrad die entsprechende Ausgangsgröße durch die Treiberschaltung bereitgestellt werden.

Es ist weiterhin bevorzugt, wenn das Stellglied ausgangsseitig einen Kondensator mit einer Kapazität kleiner als 100 nF aufweist.

Dadurch können Oberwellen der Ausgangsspannung gefiltert werden, wodurch Vibrationen des elektrischen Verbrauchers und entsprechende thermische Verluste des elektrischen Verbrauchers reduziert werden können.

Vorzugsweise weist der Läufer der elektrischen Maschine der elektrischen Antriebseinheit eine Schwungmasse auf, um Rotationsenergie des Läufers zu speichern.

Dadurch können kurzzeitige Einbrüche des Antriebsmoments bzw. der Antriebsleistung, die durch die Treiberschaltung auftreten können, kompensiert werden, so dass die von der elektrischen Maschine abgegebene Leistung bzw. die von der elektrischen Maschine bereitgestellte Drehzahl und das von der elektrischen Maschine bereitgestellte Drehmoment konstant gehalten werden können.

Im Ergebnis kann durch die Treiberschaltung eine besonders präzise Ansteuerung des elektrischen Verbrauchers realisiert werden, da der Treiberstrom präzise eingestellt werden kann und somit die dem elektrischen Verbraucher bereitgestellte Leistung von der Treiberschaltung kontrolliert wird und nicht durch den elektrischen Verbraucher bestimmt wird. Dadurch ist eine präzisere Ansteuerung des elektrischen Verbrauchers möglich. Ferner kann durch die präzise Einstellung des Treiberstroms auf eine Glättung der Ausgangsspannung verzichtet werden, wodurch gleichzeitig auf einen entsprechenden Glättungskondensator verzichtet werden kann. Dadurch kann die Treiberschaltung mit geringerem finanziellen und technischen Aufwand in geringer Bauform und mit geringerem Gewicht bereitgestellt werden. Durch die Rückkopplung der Ausgangssignale ist eine präzise Einstellung von Strom, Spannung und elektrischer Leistung am Ausgang der Treiberschaltung möglich.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer erfindungsgemäßen Treiberschaltung zum Ansteuern eines elektrischen Verbrauchers;
- Fig. 2a-c: unterschiedliche Verläufe eines Pulsfolgesignals zum Steuern eines Stellglieds der Treiberschaltung;
- Fig. 3: eine Treiberschaltung mit einem Tiefsetzsteller als Stellglied;
- Fig. 4: eine Treiberschaltung mit einem Hochsetzsteller als Stellglied;
- Fig. 5: eine Treiberschaltung mit einem Hoch-Tiefsetzsteller als Stellglied;
- Fig. 6a-c: unterschiedlich einstellbare Verläufe der elektrischen Ausgangsgröße der Treiberschaltung; und
- Fig. 7: ein Anwendungsbeispiel der Treiberschaltung zur Ansteuerung eines elektrisch kommutierten Elektromotors zur Verwendung in einem Elektrowerkzeug.

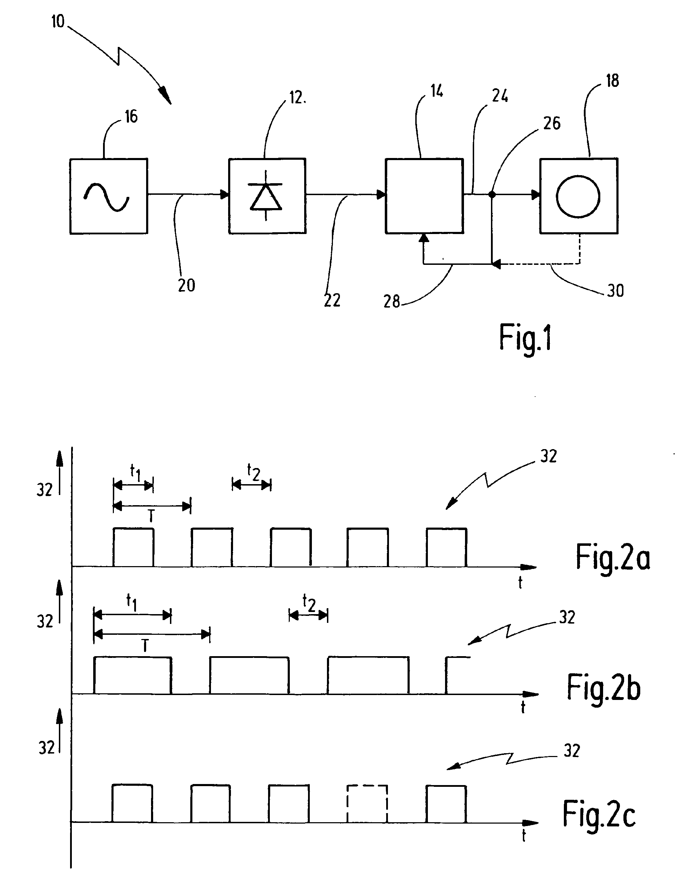

In Fig. 1 ist eine Treiberschaltung zum Ansteuern eines elektrischen Verbrauchers schematisch dargestellt und allgemein mit 10 bezeichnet.

Die Treiberschaltung 10 weist einen Gleichrichter 12 und ein Stellglied 14 auf. Der Gleichrichter 12 ist verbunden mit einer Wechselspannungsquelle 16, wie z.B. einem öffentlichen Netz 16. Das Stellglied 14 ist eingangsseitig mit dem Gleichrichter 12 verbunden und ausgangsseitig mit einem elektrischen Verbraucher 18. Der elektrische Verbraucher 18 kann beispielsweise als elektrische Maschine 18 ausgebildet sein.

Die Wechselspannungsquelle 16 stellt eine Wechselspannung 20 bereit. Der Gleichrichter 12 ist mit der Wechselspannungsquelle 16 verbunden, um die Wechselspannung 20 als Eingangsgröße zu empfangen. Der Gleichrichter 12 wandelt die Wechselspannung 20 in eine pulsierende Gleichspannung 22, die der Gleichrichter 12 dem Stellglied 14 bereitstellt. Die Wechselspannung 20 der Wechselspannungsquelle 16 ist vorzugsweise eine sinusförmige Wechselspannung 20. Der Gleichrichter ist beispielsweise als Brückengleichrichter 12 ausgebildet.

Das Stellglied 14 empfängt die pulsierende Gleichspannung 22 von dem Gleichrichter 12 und stellt eine elektrische Ausgangsgröße 24 zum Ansteuern des elektrischen Verbrauchers 18 bereit. Die elektrische Ausgangsgröße 24 ist ein elektrischer Treiberstrom, dessen Verlauf durch das Stellglied 14 eingestellt bzw. eingeprägt wird. Am Ausgang des Stellglieds 14 ist eine Messeinrichtung 26 angeordnet, die eine Ausgangsspannung und den Treiberstrom des Stellglieds 14 erfasst und das Stellglied 14 mittels eines Steuersignals 28 steuert, um den elektrischen Treiberstrom einzustellen. Alternativ kann der elektrische Verbraucher 18 für den Fall, dass der elektrische Verbraucher 18 als geregelte Last ausgebildet ist, ein Steuersignal 30 an das Stellglied 14 zurückkoppeln, um das Stellglied 14 zu steuern und entsprechend die elektrische Ausgangsgröße 24 einzustellen. In diesem Falle kann der elektrische Verbraucher 18 eine benötigte elektrische Leistung von der Treiberschaltung 10 mittels des Steuersignals 30 anfordern.

Über das Stellglied 14 kann die elektrische Ausgangsgröße 24 derart eingestellt werden, dass eine konstante elektrische Leistung dem elektrischen Verbraucher 18 bereitgestellt wird oder ein konstanter Treiberstrom dem elektrischen Verbraucher 18 bereitgestellt wird oder aber der elektrische Treiberstrom derart eingestellt wird, dass der Treiberstrom und die elektrische Spannung am Ausgang des Stellglieds 14 eine feste Phasenbeziehung aufweisen, vorzugsweise in Phase eingestellt sind. Dies ist möglich, da das Stellglied 14 zu jedem Zeitpunkt den Treiberstrom am Ausgang präzise einstellen bzw. einprägen kann, so dass Ausgangsgrößen mit entsprechendem Verlauf eingestellt werden können.

Das Stellglied 14 weist dazu vorzugsweise einen steuerbaren Schalter auf, wobei der Treiberstrom durch wechselndes Öffnen und Schließen des steuerbaren Schalters und durch Variation der Schaltfrequenz und/oder der Einschaltdauer bzw. des Tastverhältnisses des steuerbaren Schalters eingestellt wird. In der einfachsten Ausführungsform weist das Stellglied 14 lediglich den steuerbaren Schalter auf. Vorzugsweise ist das Stellglied als Hochsetzsteller, Tiefsetzsteller oder Hoch-Tiefsetzsteller mit einem oder mehreren steuerbaren Schaltern ausgebildet.

Der bzw. die steuerbaren Schalter werden durch eine in Fig. 1 nicht gesondert dargestellte Steuereinheit mittels eines Pulsfolgesignals angesteuert, um den steuerbaren Schalter zu öffnen und zu schließen und dadurch den entsprechenden Treiberstrom einzustellen. Der steuerbare Schalter wird angesteuert bzw. geschaltet, sofern die pulsierende Gleichspannung 22 einen vordefinierten Schwellenwert überschreitet. Ferner wird der Treiberstrom mit einem definierten Verlauf eingestellt, und zwar durch Variation des Pulsfolgesignals. Dabei kann das Pulsfolgesignal in Bezug auf die Einschaltdauer oder Frequenz variiert werden, um den Treiberstrom entsprechend einzustellen.

In den Fig. 2a bis c ist ein Pulsfolgesignal zum Ansteuern des steuerbaren Schalters des Stellglieds 14 schematisch dargestellt und allgemein mit 32 bezeichnet. In Fig. 2a ist das Pulsfolgesignal 32 in einer allgemeinen Form dargestellt. Das Pulsfolgesignal 32 weist fünf Pulse auf, die eine Pulsbreite t₁ und eine Periodendauer T aufweisen. Die Pulsbreite t₁ und ein Abstand t₂ der Pulse sind in diesem Beispiel identisch, so dass sich eine Einschaltdauer bzw. ein Tastverhältnis von t₁/T = 0,5 ergibt. Durch Variation der zeitlichen Größen t₁, t₂ und T können die elektrischen Ausgangsgrößen 24 des Stellglieds 14 und insbesondere der Treiberstrom eingestellt werden. Alternativ dazu kann auch die Pulshäufigkeit bei gleichbleibender Einschaltdauer variiert werden, um die elektrischen Ausgangsgrößen 24 und insbesondere den Treiberstrom einzustellen.

In Fig. 2b ist beispielhaft eine alternative Pulsfolge des Pulsfolgesignals 32 dargestellt. Die Pulsfolge weist eine größere Einschaltdauer t₁ und eine größere Periodendauer T auf, wohingegen der Pulsabstand t₂ identisch ist mit dem Pulsabstand t₂ aus Fig. 2a. Dadurch ergibt sich ein größeres Tastverhältnis, wodurch der Treiberstrom auf einen anderen Wert eingestellt wird. Bei dem Pulsfolgesignal 32 aus Fig. 2b wird mit anderen Worten ein pulsweitenmoduliertes Signal bereitgestellt, wobei der Treiberstrom über die Pulsweite eingestellt wird.

In Fig. 2c ist eine alternative Ausführungsform des Pulsfolgesignals 32 dargestellt bzw. eine alternative Methode zum Ansteuern des steuerbaren Schalters gezeigt. Die Pulsfolge 32 weist vier Pulse auf, die jeweils identisch sind mit den Pulsen aus Fig. 2a, wohingegen der vierte Puls, der hier schematisch gestrichelt dargestellt ist, ausgelassen bzw. nicht ausgebildet wird. Mit anderen Worten wird bei dieser Ausführungsform der steuerbare Schalter mit einer festen Pulsbreite zu vordefinierten Zeitpunkten geschaltet, wobei unter bestimmten Bedingungen einer der Pulse weggelassen bzw. übersprungen wird und zu diesem Zeitpunkt der steuerbare Schalter nicht geschaltet wird. Dadurch wird kurzzeitig der Pulsabstand t₂ sowie das Tastverhältnis t₁/T variiert, um die Ausgangsgröße 24 entsprechend einstellen zu können.

Um den Treiberstrom einzustellen bzw. einzuprägen, ist eine Frequenz f des Pulsfolgesignals 32 wesentlich größer als die Frequenz f der pulsierenden Gleichspannung 22. Das Verhältnis der Frequenz des Pulsfolgesignals 32 zur Frequenz der pulsierenden Gleichspannung 22 ist größer als 1.000.

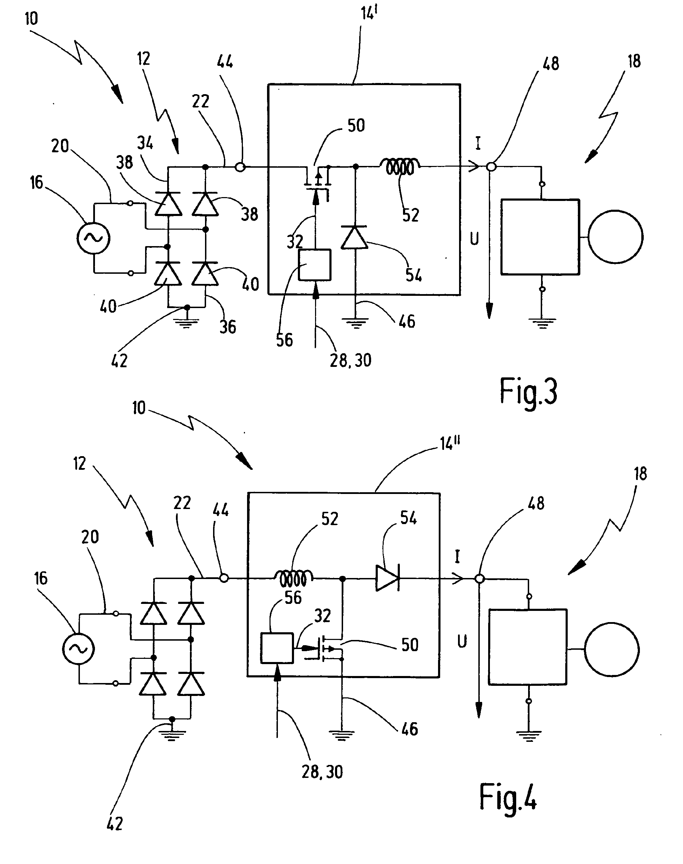

In Fig. 3 ist eine Ausführungsform der Treiberschaltung 10 gezeigt, bei der das Stellglied 14' als Tiefsetzsteller 14' ausgebildet ist. Gleiche Elemente sind mit gleichen Bezugsziffern bezeichnet, wobei hier lediglich die Besonderheiten erläutert sind.

Der Gleichrichter 12 ist als Brückengleichrichter 12 ausgebildet und weist zwei Gleichrichterbrücken 34, 36 mit jeweils zwei Dioden 38, 40 auf. Der Gleichrichter 12 ist mit der Wechselspannungsquelle 16 verbunden, weist einen Massepol 42 auf, und ist mit einem Eingangsanschlusspol 44 des Stellglieds 14 elektrisch verbunden.

Das Stellglied 14' ist mit einem Massepol 46 verbunden und weist den Eingangsanschlusspol 44 und einen Ausgangsanschlusspol 48 auf, der mit dem elektrischen Verbraucher 18 verbunden ist. Das Stellglied 14' weist einen steuerbaren Schalter 50, eine Drossel 52 bzw. eine Spule 52 und eine Diode 54 auf. Der steuerbare Schalter 50 ist mit der Drossel 52 in Reihe zwischen dem Eingangsanschlusspol 44 und dem Ausgangsanschlusspol 48 geschaltet. Zwischen dem steuerbaren Schalter 50 und der Drossel 52 ist die Diode 54 angeschlossen und bildet eine Verbindung vom Massepol 46 zu der Drossel 52. Der steuerbare Schalter 50 wird von einer Steuereinheit 56 mittels des Pulsfolgesignals 32 angesteuert bzw. geöffnet und geschlossen. Durch das Öffnen und Schließen des steuerbaren Schalters 50 wird an dem Ausgangsanschlusspol 48 der Treiberstrom I und eine Ausgangsspannung U als die elektrischen Ausgangsgrößen 24 bereitgestellt, die zum Treiben des elektrischen Verbrauchers 18 dienen.

Durch Variation des Pulsfolgesignals 32, also durch Variation einer zeitlichen Größe des Pulsfolgesignals 32, wie es oben beschrieben ist, kann der Treiberstrom I mit einem definierten Verlauf eingeprägt werden. Die Steuereinheit 56 wird angesteuert von dem Steuersignal 28 oder dem Steuersignal 30 der Messeinrichtung 26 oder des elektrischen Verbrauchers 18, um den Treiberstrom I über das Pulsfolgesignal 32 entsprechend einzustellen bzw. einzuprägen.

Dem Eingangsanschlusspol 44 ist ferner eine hier nicht gesondert dargestellte Messeinrichtung zugeordnet, die die pulsierende Gleichspannung 22 erfasst und ein entsprechendes Signal an die Steuereinheit 56 weiterleitet. Die Steuereinheit 56 schaltet den steuerbaren Schalter 50 nur dann, wenn die pulsierende Gleichspannung 22 einen vordefinierten Schwellenwert überschreitet. Dadurch wird der Treiberstrom I und die Ausgangsspannung U nur für den Fall eingestellt, dass die pulsierende Gleichspannung 22 den vordefinierten Schwellenwert überschreitet. Dadurch kann der Austausch von Blindströmen zwischen dem elektrischen Verbraucher 18 und dem Stellglied 14 vermieden werden, da die Ausgangsspannung U größer eingestellt werden kann als evtl. in dem elektrischen Verbraucher 18 induzierte Spannungen.

Bei herkömmlichen Treiberschaltungen wird eingangsseitig, also zwischen dem Eingangsanschlusspol 44 und dem Massepol 42, ein Glättungskondensator mit einer großen Kapazität geschaltet, um die pulsierende Gleichspannung 22 zu glätten. Ferner wird gemäß dem Stand der Technik ausgangsseitig des Stellglieds 14, also zwischen dem Ausgangsanschlusspol 48 und dem Massepol 46 ein weiterer Glättungskondensator geschaltet, der eine hohe Kapazität aufweist, um die Ausgangsspannung U entsprechend zu glätten. Dieser zusätzliche Kondensator wird auch als Zwischenkreiskondensator bezeichnet. Derartige Ausführungsformen mit großen Kapazitäten erfordern einen großen Bauraum, weisen ein hohes Gewicht auf und reduzieren den Wirkungsgrad der Treiberschaltung 10, da hier viel elektrische Energie zwischen dem Stellglied 14, dem Zwischenkreiskondensator und dem elektrischen Verbraucher 18 ausgetauscht wird. Die erfindungsgemäße Treiberschaltung 10 benötigt keinen Zwischenkreiskondensator, da hier durch die besondere Ansteuerung des steuerbaren Schalters 50 keine gesonderte Glättung notwendig ist. Im Übrigen kann eine Glättung auch durch eine eingangsseitige Kapazität des elektrischen Verbrauchers 18 ausgeführt werden.

In Fig. 4 ist eine alternative Ausführungsform mit einem Hochsetzsteller als Stellglied 14" schematisch dargestellt. Gleiche Elemente sind mit gleichen Bezugsziffern bezeichnet, wobei hier lediglich die Besonderheiten erläutert sind.

Das Stellglied 14" ist als Hochsetzsteller ausgebildet und weist den steuerbaren Schalter 50, die Drossel 52 und die Diode 54 auf. Die Drossel 52 ist in Reihe geschaltet mit der Diode 54, und zwar zwischen dem Eingangsanschlusspol 44 und dem Ausgangsanschlusspol 48. Zwischen der Drossel 52 und der Diode 54 ist der steuerbare Schalter 50 angeschlossen und bildet eine Verbindung zu dem Massepol 46. Der steuerbare Schalter 50 wird von der Steuereinheit 56 mittels des Pulsfolgesignals 32 angesteuert. Die Steuereinheit 56 wird mittels des Steuersignals 28 oder des Steuersignals 30 von der Messeinrichtung 26 oder dem elektrischen Verbraucher 18 angesteuert, um den Treiberstrom I entsprechend einzustellen. Durch Öffnen und Schließen des steuerbaren Schalters 50 wird durch den Hochsetzsteller der Treiberstrom I und die Ausgangsspannung U bereitgestellt, wobei die Ausgangsspannung U größer sein kann als die pulsierende Gleichspannung 22 am Eingangsanschlusspol 44.

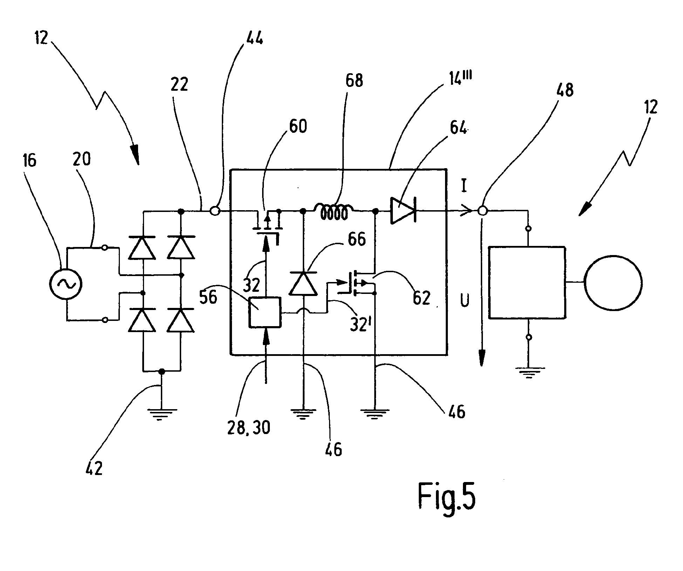

In Fig. 5 ist eine weitere Ausführungsform mit einem Hoch-Tiefsetzsteller 14"' als Stellglied 14"' schematisch dargestellt. Gleiche Elemente sind mit gleichen Bezugsziffern bezeichnet, wobei hier lediglich die Besonderheiten erläutert sind.

Das Stellglied 14"' weist einen ersten steuerbaren Schalter 60 und einen zweiten steuerbaren Schalter 62 auf. Das Stellglied 14"' weist ferner eine erste Diode 64 und eine zweite Diode 66 auf. Das Stellglied 14"' weist ferner eine Drossel 68 auf. Der erste Schalter 60, die Drossel 68 und die erste Diode 64 sind in Reihe zwischen dem Eingangsanschlusspol 44 und dem Ausgangsanschlusspol 468 geschaltet. Zwischen dem ersten Schalter 60 und der Drossel 68 ist die zweite Diode 66 angeschlossen und bildet eine Verbindung von dem Massepol 46 zu der Drossel 68. Zwischen der Drossel 68 und der ersten Diode 64 ist der zweite steuerbare Schalter 64 geschaltet und bildet eine Verbindung zu dem Massepol 46.

Der erste steuerbare Schalter 60 und der zweite steuerbare Schalter 62 werden von der Steuereinheit 56 angesteuert und geöffnet und geschlossen, um den Treiberstrom I und die Ausgangsspannung U am Ausgangsanschlusspol 48 bereitzustellen. Der erste steuerbare Schalter 60 wird mittels des Pulsfolgesignals 32 angesteuert und der zweite steuerbare Schalter 62 wird mittels des Pulsfolgesignals 32' angesteuert. Die Pulssignalfolgen 32, 32' können identisch oder invers zueinander ausgestaltet sein oder aber unabhängig voneinander eingestellt werden.

Der Hoch-Tiefsetzsteller 14"' gemäß dieser Ausführungsform kann eine Ausgangsspannung U bereitstellen, die je nach Ansteuerung der steuerbaren Schalter 60, 62 größer oder kleiner ist als die pulsierende Gleichspannung 22.

In einer einfachsten Form kann das Stellglied 14 auch als steuerbarer Schalter, insbesondere als MOSFET, ausgebildet sein.

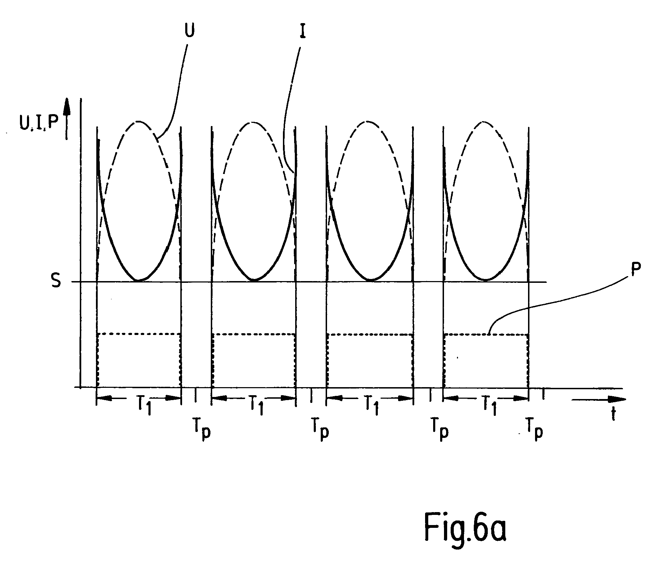

In Fig. 6a bis c sind Verläufe von den elektrischen Ausgangsgrößen 24 des Stellglieds 14 über vier Perioden der pulsierenden Gleichspannung 22 schematisch dargestellt. Die elektrische Leistung P ist dabei mit einer gepunkteten Linie, der Treiberstrom I mit einer durchgezogenen Linie und die Ausgangsspannung U mit einer gestrichelten Linie dargestellt.

In Fig. 6a sind vier Perioden Tₚ der pulsierenden Gleichspannung 22 dargestellt. Der Verlauf des Treiberstroms I ist dabei derart eingestellt, dass die elektrische Leistung P im Wesentlichen konstant ist. Der Treiberstrom I wird dabei lediglich für einen bestimmten Zeitraum T₁ bereitgestellt, bei dem die pulsierende Gleichspannung 22 oberhalb eines Schwellenwertes S liegt, der in Fig. 6a schematisch als horizontale Linie dargestellt ist.

Um die elektrische Leistung P für den Zeitabschnitt T₁ konstant einzustellen, werden der Treiberstrom I und die Ausgangsspannung U durch die Messeinrichtung 26 am Ausgang des Stellglieds 14 gemessen und über das Steuersignal 28 und das Pulsfolgesignal 32 der Treiberstrom I mit einem Verlauf eingestellt, so dass die elektrische Leistung P für den Zeitbereich T₁ konstant ist. Zwischen den Zeitabschnitten T₁ wird der steuerbare Schalter 50', 60, 62 nicht geschaltet, so dass keine elektrische Leistung P bereitgestellt wird. Sofern der elektrische Verbraucher 18 als elektrische Maschine 18 ausgebildet ist, kann dieser Leistungseinbruch durch die rotierende Masse des Läufers oder eine mit dem Läufer verbundene Schwungmasse ausgeglichen werden. Die rotierende Masse speichert Rotationsenergie, so dass kurzzeitige Leistungseinbrüche kompensiert werden können. Die konstante Leistung P kann durch das Stellglied 14 eingestellt werden, da durch die hohe Pulsfrequenz f des Pulsfolgesignals 32 und die regelmäßige Messung des Treiberstroms I und der Ausgangsspannung U sehr kurzfristig geändert werden und dementsprechend eingestellt bzw. eingeprägt werden kann.

Im Ergebnis kann so die elektrische Leistung P, die dem elektrischen Verbraucher 18 bereitgestellt wird, eingestellt werden, so dass auch die vom elektrischen Verbraucher 18 abgegebene Leistung entsprechend eingestellt bzw. geregelt werden kann.

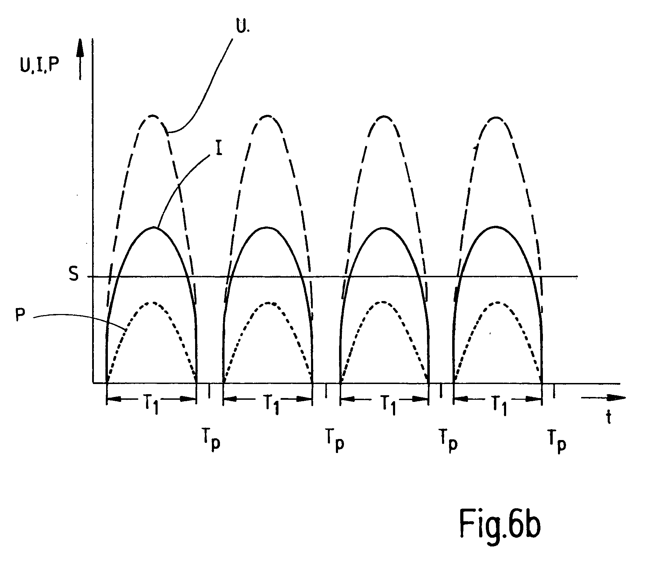

In Fig. 6b ist ein alternativer Verlauf der elektrischen Ausgangsgrößen 24 für vier Perioden Tₚ der pulsierenden Gleichspannung 22 dargestellt. Dabei wird der Treiberstrom I derart eingestellt, dass der Treiberstrom I und die Ausgangsspannung U eine feste Phasenbeziehung zueinander aufweisen. In dem hier dargestellten Beispiel sind sie phasengleich, wobei jedoch auch eine feste Phasenverschiebung eingestellt werden kann. Dabei wird der Treiberstrom I und die Ausgangsspannung U am Ausgang des Stellglieds 14 regelmäßig erfasst und über das Steuersignal 28 und das Pulsfolgesignal 32 der Treiberstrom I entsprechend eingestellt, so dass die Ausgangsspannung U und der Treiberstrom I phasengleich ausgebildet sind.

Dadurch kann im Allgemeinen der Austausch von Blindleistung zwischen dem Stellglied 14 und dem elektrischen Verbraucher 18 minimiert werden. Ferner kann dadurch die abgegebene elektrische Leistung maximiert werden.

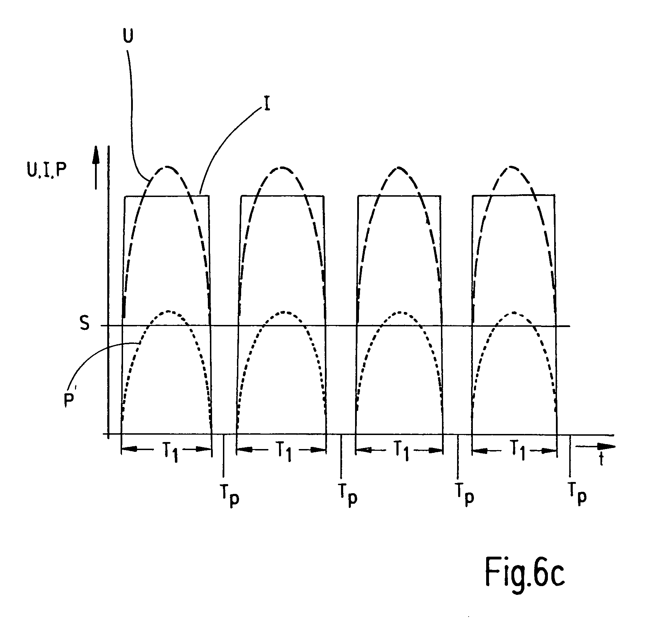

In Fig. 6c ist ein weiteres Beispiel für den Verlauf der elektrischen Ausgangsgrößen 24 schematisch dargestellt. Dabei wird der Treiberstrom I als konstanter Strom über den Zeitbereich T₁ eingestellt. In dieser Ausführungsform muss lediglich der Treiberstrom I durch die Messeinrichtung 26 gemessen werden und über das Steuersignal 28 und das Pulsfolgesignal 32 entsprechend geregelt werden, so dass der Treiberstrom I konstant eingestellt bzw. eingeprägt wird.

Die Verläufe der Fig. 6a bis c können auch entsprechend durch den elektrischen Verbraucher 18 mittels des Steuersignals 30 angefordert werden, so dass dem elektrischen Verbraucher 18 entsprechend die elektrischen Eingangsgrößen 24 bereitgestellt werden.

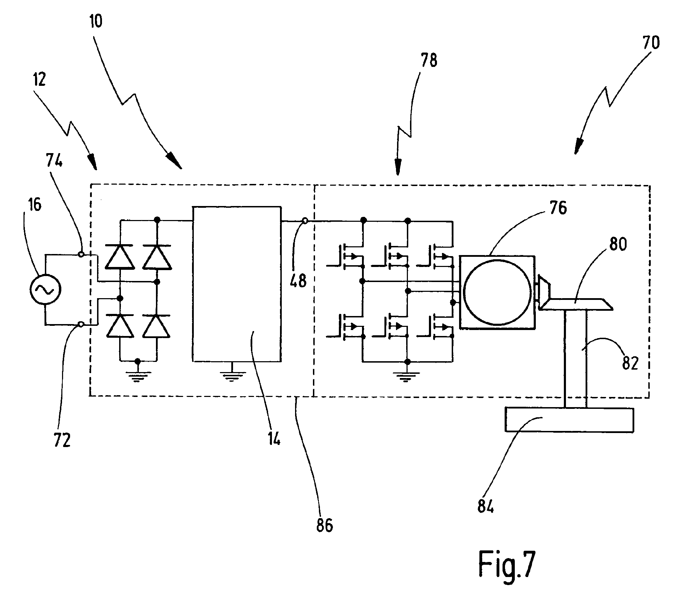

In Fig. 7 ist ein Anwendungsbeispiel der Treiberschaltung 10 für ein Elektrowerkzeug dargestellt, das allgemein mit 70 bezeichnet ist.

Das Elektrowerkzeug 70 weist elektrische Anschlüsse 72, 74 auf, um das Elektrowerkzeug 70 mit der Wechselspannungsquelle 16 zu verbinden. Das Elektrowerkzeug 70 weist die Treiberschaltung 10 und eine elektrische Maschine 76 auf, die mittels eines Wechselrichters 78 angesteuert wird. Die elektrische Maschine 76 treibt über ein Getriebe 80 eine Welle 82 an, die drehfest mit einer Schleifscheibe 84 verbunden ist. Die Treiberschaltung 10, der Wechselrichter 78, die elektrische Maschine 76, das Getriebe 80 und die Welle 82 sind in einem Gehäuse 86 des Elektrowerkzeugs 70 aufgenommen. Die Treiberschaltung 10 stellt an dem Ausgangsanschlusspol 48 den Treiberstrom I und die Ausgangsspannung U bereit, die dem Wechselrichter 78 zur Verfügung gestellt werden. Der Wechselrichter 78 ist als Dreiphasenwechselrichter 78 mit sechs steuerbaren Schaltern ausgebildet und wandelt die bereitgestellte elektrische Eingangsgröße I, U in einen Dreiphasenwechselstrom, um die elektrische Maschine 76 entsprechend anzutreiben. In dem hier vorliegenden Beispiel ist die elektrische Maschine 76 als elektrisch kommutierte Maschine 76 ausgebildet. Die elektrische Maschine 76 treibt entsprechend über das Getriebe 80 und die Welle 82 die Schleifscheibe 84 an.

Es versteht sich, dass die Treiberschaltung 10 auch zum Antreiben von anderen Maschinentypen verwendet werden kann, wie zum Beispiel Gleichstrommaschinen.

Alternativ kann die Treiberschaltung 10 auch für einen Stromzwischenkreisumrichter oder einen Spannungszwischenkreisumrichter verwendet werden. Im Fall eines Stromzwischenkreisumrichters wird dabei eine zusätzliche Drossel parallel zu der Drossel 52, 68 geschaltet, um den Treiberstrom I entsprechend zu glätten. Im Falle des Spannungszwischenkreisumrichters wird ausgangsseitig parallel zu dem Stellglied 14 ein Kondensator mit einer hohen Kapazität geschaltet, um die Ausgangsspannung I, U entsprechend zu glätten. Mit anderen Worten wird der Kondensator zwischen dem Ausgangsanschlusspol 48 und dem Massepol geschaltet.

## Patentansprüche

1. Treiberschaltung (10) zum Ansteuern eines elektrischen Verbrauchers (18), insbesondere einer elektrischen Maschine (18), mit:
- einem Eingangsanschlusspolpaar (72, 74), um die Treiberschaltung (10) mit einer Wechselspannungsquelle zu verbinden,
- einem Ausgangsanschlusspol (48), um die Treiberschaltung (10) mit dem Verbraucher (18) zu verbinden,
- einer Gleichrichterschaltung (12), die mit dem Eingangsanschlusspolpaar (72, 74) verbunden ist, um eine Wechselspannung (20) der Wechselspannungsquelle (16) in eine pulsierende Gleichspannung (22) zu wandeln,
- einem Stellglied (14), das eingangsseitig mit der Gleichrichterschaltung (12) und ausgangsseitig mit dem Ausgangsanschlusspol (48) verbunden ist, wobei das Stellglied (14) einen steuerbaren Schalter (50; 60,62) und eine Steuerung (56) zum Steuern des steuerbaren Schalters (50; 60, 62) aufweist, wobei die Steuerung (56) den steuerbaren Schalter (50; 60, 62) mittels eines Pulsfolgesignals (32) entsprechend ein- und ausschaltet, und wobei eine elektrische Ausgangsgröße (18) der Treiberschaltung (10) durch Schalten des steuerbaren Schalters (50; 60, 62) einstellbar ist,
**dadurch gekennzeichnet, dass** die Steuerung (56) dazu ausgebildet ist, wenigstens eine zeitliche Größe (T, t₁, t₂, f) des Pulsfolgesignals (32) innerhalb einer Periode (Tp) der pulsierenden Gleichspannung (22) derart zu variieren, dass an dem Ausgangsanschlusspol (48) ein Treiberstrom (I) mit einem definierten Verlauf innerhalb der Periode (Tₚ) eingestellt wird.

2. Treiberschaltung nach Anspruch 1, **dadurch gekennzeichnet, dass** die zeitliche Größe des Pulsfolgesignals (32) eine Pulshäufigkeit innerhalb der Periode (Tₚ) ist.

3. Treiberschaltung nach Anspruch 1 oder 2, **dadurch gekennzeichnet, dass** die zeitliche Größe des Pulsfolgesignals (32) ein Tastverhältnis (t₁/T) des Pulsfolgesignals (32) ist.

4. Treiberschaltung nach einem der Ansprüche 1 bis 3, **dadurch gekennzeichnet, dass** die Steuerung (56) mit einer Messanordnung (26) verbunden ist, die zum Messen einer Ausgangsspannung (U) und/oder des Treiberstroms (I) dem Ausgangsanschlusspol (48) zugeordnet ist, um die zeitliche Größe (T, t₁, t₂, f) auf der Grundlage der gemessenen Ausgangsspannung (U) und/oder des gemessenen Treiberstroms (I) einzustellen.

5. Treiberschaltung nach einem der Ansprüche 1 bis 4, **dadurch gekennzeichnet, dass** eine Steuereinheit des Verbrauchers (18) über eine Steuerleitung mit der Steuerung (56) verbunden ist, um die zeitliche Größe (T, t₁, t₂, f) einzustellen.

6. Treiberschaltung nach einem der Ansprüche 1 bis 5, **dadurch gekennzeichnet, dass** das Stellglied (14) eine eingangsseitige Messvorrichtung aufweist, um die pulsierende Gleichspannung (22) zu messen und den Treiberstrom (I) mittels des Pulsfolgesignals (32) bereitzustellen, sofern die pulsierende Gleichspannung (32) einen vordefinierten Schwellenwert (S) überschreitet.

7. Treiberschaltung nach einem der Ansprüche 1 bis 6, **dadurch gekennzeichnet, dass** die zeitliche Größe (T, t₁, t₂, f) derart einstellbar ist, dass eine an dem Ausgangspol (48) bereitgestellte elektrische Leistung (P) konstant ist.

8. Treiberschaltung nach einem der Ansprüche 1 bis 7, **dadurch gekennzeichnet, dass** die zeitliche Größe (T, t₁, t₂, f) derart einstellbar ist, dass der bereitgestellte Treiberstrom (I) konstant ist.

9. Treiberschaltung nach einem der Ansprüche 1 bis 8, **dadurch gekennzeichnet, dass** die zeitliche Größe (T, t₁, t₂, f) derart einstellbar ist, dass der Treiberstrom (I) phasengleich ist mit der Ausgangsspannung (U).

10. Treiberschaltung nach einem der Ansprüche 4 bis 9, **dadurch gekennzeichnet, dass** die Messanordnung (26) dazu ausgebildet ist, die elektrische Größe (24) zu vordefinierten Zeitpunkten innerhalb der Periode (Tₚ) zu messen und ein entsprechendes Steuersignal (28) der Steuereinheit (56) bereitzustellen.

11. Treiberschaltung nach Anspruch 10, **dadurch gekennzeichnet, dass** die Steuerung (56) dazu ausgebildet ist, den steuerbaren Schalter (50; 60, 62) zu den vordefinierten Zeitpunkten mittels des Pulsfolgesignals (32) in Abhängigkeit des Steuersignals (28) zu steuern.

12. Treiberschaltung nach einem der Ansprüche 1 bis 11, **dadurch gekennzeichnet, dass** das Stellglied (14) als Hochsetzsteller (14'), als Tiefsetzsteller (14") oder als Hochtiefsetzsteller (14"') ausgebildet ist.

13. Treiberschaltung nach einem der Ansprüche 1 bis 10, **dadurch gekennzeichnet, dass** das Stellglied (14) ausgangsseitig einen Kondensator mit einer Kapazität kleiner als 100 nF aufweist.

14. Verfahren zum Ansteuern eines elektrischen Verbrauchers (18), insbesondere einer elektrischen Maschine (18), mit den Schritten:
- Verbinden einer Gleichrichterschaltung (12) mit einer Wechselspannungsquelle (16),
- Wandeln einer Wechselspannung (20) von der Wechselspannungsquelle (16) in eine pulsierende Gleichspannung (22),
- Wandeln der pulsierenden Gleichspannung (22) mittels eines Stellglieds (14) in eine elektrische Ausgangsgröße (24) zum Ansteuern des elektrischen Verbrauchers (18), wobei das Stellglied (14) einen steuerbaren Schalter (50; 60, 62) aufweist, der mittels eines Pulsfolgesignals (32) entsprechend ein- und ausgeschaltet wird, um die elektrische Ausgangsgröße (24) in Abhängigkeit wenigstens einer zeitlichen Größe (T, t₁, t₂, f) des Pulsfolgesignals (32) einzustellen,
**dadurch gekennzeichnet, dass** die zeitliche Größe (T, t₁, t₂, f) des Pulsfolgesignals (32) innerhalb einer Periode (Tₚ) der pulsierenden Gleichspannung (22) variiert wird, um einen Treiberstrom (I) als die elektrische Ausgangsgröße (24) in der Periode (Tₚ) entsprechend definiert einzustellen.

15. Elektrowerkzeug (70) mit einer elektrischen Maschine (76) und mit einer Treiberschaltung (10) nach einem der Ansprüche 1 bis 13 zum Ansteuern der elektrischen Maschine (76).

16. Elektrische Antriebseinheit mit einer elektrischen Maschine (76), die einen Ständer und einen Läufer aufweist, und mit einer Treiberschaltung (10) nach einem der Ansprüche1 bis 13 zum Ansteuern der elektrischen Maschine (76), wobei der Läufer (76) eine Schwungmasse aufweist, um Rotationsenergie des Läufers zu speichern.
